# EUROPEAN PATENT APPLICATION

(11) **EP 4 459 765 A1**
(43) Date of publication of application: **06.11.2024**
(21) Application number: 23739922.5
(22) Date of filing: 06.01.2023
(51) Int. Cl.: H01M 50/262, H01M 50/298, H01M 50/249

(54) **BATTERY AND ELECTRIC DEVICE**

(30) Priority: 11.01.2022 CN 202220064308 U
(71) Applicant: Contemporary Amperex Technology Co., Limited, Fujian 352100 (CN)
(72) Inventor: HUANG, Zhexun, Ningde City, Fujian 352100 (CN); XIE, Renxin, Ningde City, Fujian 352100 (CN); LUO, Wenchao, Ningde City, Fujian 352100 (CN)
(74) Representative: Ziebig Hengelhaupt Intellectual Property Attorneys Patentanwaltskanzlei PartGmbB
(86) International application number: PCT/CN2023/071026
(87) International publication number: WO 2023/134579

(57) **Abstract**

The present disclosure provides a battery cell and an electric device, relating to the technology field of batteries. The present disclosure provides the battery, comprising a box; a high-voltage wiring harness arranged inside the box; a heating wiring harness arranged inside the box; and a wiring harness fixing device configured to fix the high-voltage wiring harness and the heating wiring harness to an inner wall of the box. The present disclosure further provides an electric device, comprising the battery. The battery comprises a wiring harness fixing device that can simultaneously fix high-voltage wiring harnesses and heating wiring harnesses, which simplifies the assembly process for the battery and improves the positional accuracy of both the high-voltage wiring harnesses and heating wiring harnesses, thus enhancing the safety performance of the battery.

## Description

### Cross-reference to Related Applications

The present disclosure claims the priority to the Chinese patent application with the filling No. 202220064308.2 filed on January 11, 2022, and entitled "Battery and Electric Device", the contents of which are incorporated herein by reference in entirety.

### Technical Field

The present disclosure relates to the technical field of battery manufacturing, in particular to a battery and an electric device.

### Background Art

With the continued prosperity of the new energy vehicle market, the power battery industry is rapidly expanding and growing. Lithium battery technology is increasingly advancing, thus placing higher and higher demands on the safety performance and industrialization requirements of batteries.

In the battery assembly process, it is necessary to use wiring harnesses to make electrical connections, signal connections, and external connections to the components inside the battery. However, the wiring harnesses inside the battery are of various types. Currently, the main method involves fixing the wiring harnesses to the box of the battery by pasting or binding by using ties. Additionally, different types of wiring harnesses are independently arranged. This not only increases the complexity of battery assembly but also results in poor positional accuracy of the wiring harnesses, thus indirectly affecting the safety performance of the battery.

### Summary

For this objective, the present disclosure provides a battery and an electric device that can simultaneously fix high-voltage wiring harnesses and heating wiring harnesses, which simplifies the assembly process for the battery and improves the positional accuracy of both the high-voltage wiring harnesses and heating wiring harnesses, thus enhancing the safety performance of the battery.

According to some embodiments of the present disclosure, the battery includes a box; a high-voltage wiring harness arranged inside the box; a heating wiring harness arranged inside the box; and a wiring harness fixing device configured to fix the high-voltage wiring harness and the heating wiring harness to an inner wall of the box.

For the battery provided in the embodiments of the present disclosure, the wiring harness fixing device simultaneously fixes the high-voltage wiring harness and the heating wiring harness to the inner wall of the box. This not only simplifies the assembly process of the battery but also accurately fixes the positions of the high-voltage wiring harness and the heating wiring harness, thus enhancing the safety performance of the battery.

According to some embodiments of the present disclosure, the wiring harness fixing device comprises a harness fixing portion, wherein the harness fixing portion, together with the inner wall of the box, forms a channel for the high-voltage wiring harness and the heating wiring harness to pass through.

In the above solution, the harness fixing portion, together with the inner wall of the box, forms a channel for the high-voltage wiring harness and the heating wiring harness to pass through. This allows for a reduction in the thickness of the harness fixing portion and the space occupied by the harness fixing portion. Therefore, the internal structure of the battery becomes more compact, which leads to an increased energy density.

According to some embodiments of the present disclosure, on one side of the harness fixing portion facing the inner wall of the box, a partition is arranged. The partition is configured to separate the channel into a first sub-channel and a second sub-channel. The first sub-channel is configured for the high-voltage wiring harness to pass through, and the second sub-channel is configured for the heating wiring harness to pass through.

In the above solution, the partition separates the channel into a first sub-channel and a second sub-channel. This not only physically isolates the high-voltage wiring harness and the heating wiring harness but also allows for the separate fixation of the high-voltage wiring harness and the heating wiring harness, thus improving the firmness and the positional accuracy of the high-voltage wiring harness and heating wiring harness.

According to some embodiments of the present disclosure, the wiring harness fixing device also includes a connecting part. The connecting part is arranged on one side of the harness fixing portion and is connected to the harness fixing portion. The connecting part is fixed to the box.

In the above solution, the connecting part is fixed to the box so as to fix the wiring harness fixing device to the box, thus ensuring the stability of the channel formed by the harness fixing portion and the inner wall of the box and firmly fixing the high-voltage wiring harness and heating wiring harness inside the box.

According to some embodiments of the present disclosure, the connecting part is provided with a first engagement part, and the battery further includes a bracket, wherein the bracket is fixed to the inner wall of the box. The bracket is provided with a second engagement part configured to coordinate with the first engagement part.

In the above solution, the bracket is provided with a second engagement part, which simplifies the structure inside the box and reduces the molding cost of the second engagement part. The connecting part and the bracket are connected in a snapping manner by the first engagement part and the second engagement part so as to enable the detachable connection between the wiring harness fixing device and the inner wall of the box, facilitate the assembly and disassembly of the wiring harness fixing device, and facilitate the assembly, maintenance, and disassembly of the battery.

In some embodiments of the present disclosure, a side of the bracket facing the inner wall of the box and the inner wall of the box jointly define a slot configured for the connecting part to insert, and the second engagement part is arranged on a slot wall of the slot.

In the above solution, the bracket and the inner wall of the box jointly define a slot so that the connecting part is guided to cooperate with the surface of the bracket in a manner of sliding so as to achieve a snapping cooperation. This simplifies the assembly process of the wiring harness fixing device and the bracket.

According to some embodiments of the present disclosure, the connecting part is provided with a reinforcement rib.

In the above solution, the arrangement of the reinforcement rib on the connecting part enhances the structural strength of the connecting part, thus ensuring a robust connection between the connecting part and the inner wall of the box.

According to some embodiments of the present disclosure, the connecting part and the harness fixing portion are integrally molded.

In the above solution, the wiring harness fixing device is an integrally molded structure, which is simple to construct and easy to process and mold. The high-voltage wiring harness and heating wiring harness are fixed to the inner wall of the box through the elasticity of the material of the harness fixing portion itself, which is simple, reliable, and easy to implement.

According to some embodiments of the present disclosure, the harness fixing portion is rotatably connected to the connecting part, and the axis of rotation of the harness fixing portion is parallel to an extension direction of the channel.

In the above solution, the harness fixing portion and the connecting part are in rotational cooperation, which can be realized that the connecting part is first connected to the inner wall of the box, and the high-voltage wiring harness and the heating wiring harness are placed between the inner wall of the box and the harness fixing portion. The harness fixing portion is then driven to rotate in a direction close to the inner wall of the box so as to fix the high-voltage wiring harness and the heating wiring harness to the inner wall of the box. Therefore, the assembly process of the battery is simplified and the assembly efficiency of the battery is improved.

According to some embodiments of the present disclosure, the inner wall of the box is provided with a third engagement part, wherein the harness fixing portion is provided with a fourth engagement part configured for cooperating with the third engagement part.

In the above-described embodiment, the harness fixing portion is snapped to the inner wall of the box by the third engagement part and the fourth engagement part so as to fix the position of the harness fixing portion relative to the inner wall of the box after the harness fixing portion fixes the high-voltage wiring harness and the heating wiring harness to the inner wall of the box. Thus, the high-voltage wiring harness and the heating wiring harness are firmly fixed inside the box.

In the second aspect, the embodiments of the present disclosure provide an electric device comprising the battery provided in the first aspect of the embodiments of the present disclosure, wherein the battery is configured to provide electrical energy.

Due to the characteristics of the battery provided in the embodiment of the first aspect of the present disclosure, the electric device provided in the embodiment of the second aspect of the present disclosure also has the advantages of being easy to assemble and having a high level of safety.

The additional aspects and advantages of the present disclosure will be partially disclosed in the following description, while some may become evident from the description or be understood through practical implementation of the present disclosure.

### Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 shows a simple schematic diagram of a vehicle in an embodiment of the present disclosure;
FIG. 2 shows a schematic view of the structure of the battery of the vehicle of FIG. 1;
FIG. 3 shows a top view of the battery provided in some embodiments of the present disclosure;
FIG. 4 shows an A-A sectional view of FIG. 3;
FIG. 5 shows a partially enlarged view at B of FIG. 4;
FIG. 6 shows a schematic diagram of the assembly of a first form of the box and wiring harness fixing device of the battery in some embodiments of the present disclosure;
FIG. 7 shows a partially enlarged view at C in FIG. 6;
FIG. 8 shows a schematic structural diagram of the wiring harness fixing device of the battery illustrated in FIG. 7;
FIG. 9 shows a schematic diagram of the assembly of a second form of the box and wiring harness fixing device of the battery in some embodiments of the present disclosure;
FIG. 10 shows a partially enlarged view at D in FIG. 9;
FIG. 11 shows a schematic structural diagram of the second form of the wiring harness fixing device of the battery in some embodiments of the present disclosure;
FIG. 12 shows a schematic diagram of the structure of the wiring harness fixing device of FIG. 11 in cooperation with the box; and
in the drawings, the drawings are not drawn to actual scale.

Reference numerals 1000- vehicle; 100- battery; 10- box; 11- first box; 111 - side wall; 1111 - first side wall; 1112- second side wall; 1113- third side wall; 1114- fourth side wall; 1115- first inner surface; 112- bottom wall; 113-third engagement part; 20- battery cell group; 21- battery cell; 30- high-voltage wiring harness; 40- heating wiring harness; 50- wiring harness fixing device; 51- harness fixing portion; 511- concave portion; 5111- bottom surface; 512-weight reducing groove; 513- first concave portion; 514- second concave portion; 515- fourth engagement part; 52- connecting part; 521- first engagement part; 522- reinforcement rib; 53- partition; 531- end part; 54-channel; 541- first sub-channel; 542- second sub-channel; 55- turning pin; 60-bracket; 61- second engagement part; 62- first connecting part; 63- second connecting part; 64- slot; 641- slot wall; 200- controller; 300-motor.

### Detailed Description of Embodiments

In order to make the objective, technical solutions, and advantages of the embodiments of the present disclosure clearer, the following description will provide a clear and comprehensive explanation of the technical solutions in the embodiments of the present disclosure with reference to the drawings. Clearly, the described embodiments are part of the embodiments of the present disclosure and not the entire embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms "comprise" and "provide" and their variations, as well as any other variations, are intended to cover non-exclusive inclusion in the summary and the claims of the present disclosure, as well as in the drawings. The terms "first", "second", etc., used in the summary and claims of the present disclosure, or in the above drawings, are used to distinguish between different objects and are not intended to describe a specific sequence or hierarchy.

The term "embodiment" used in the present disclosure means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other. Those skilled in the art understand explicitly and implicitly that the embodiments described in the present disclosure can be combined with other embodiments.

In the description of the present disclosure, it should be noted that, unless otherwise clearly stipulated and limited, the terms "provide", "interconnect", "connect" and "attach" should be understood in a broad sense, for example, it can be a fixed connection, a detachable connection, or an integral connection, and it can be a direct connection, an indirect connection through an intermediary, or an internal communication between two components. Those of ordinary skill in the art can understand the meanings of the above terms in the present disclosure according to specific situations.

In the present disclosure, the term "multiple" refers to two or more (including two).

In the present disclosure, the battery cell can comprise various types of batteries such as lithium-ion secondary batteries, lithium-ion primary batteries, lithium-sulfur batteries, sodium-lithium ion batteries, sodium-ion batteries, magnesium-ion batteries, etc. The embodiments of the present disclosure are not limited to any specific type of battery. The battery cell can have various shapes such as cylindrical, flat, rectangular, or other shapes. The embodiments of the embodiments of the present disclosure do not impose limitations on this aspect either. The battery cells are generally categorized into three packaging types: cylindrical battery cells, prismatic battery cells, and pouch battery cells.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. Batteries typically comprise a box that is configured to encapsulate one or multiple battery cells. The box helps to prevent liquids or other foreign substances from affecting the charging or discharging of the battery cells.

A battery cell comprises an electrode assembly and an electrolyte. The electrode assembly is composed of a positive electrode sheet, a negative electrode sheet, and a separator. The operation of the battery cell relies on the movement of metal ions between the positive electrode sheet and the negative electrode sheet. The positive electrode sheet comprises a positive electrode current collector and a positive electrode active material layer. The positive electrode active material layer is coated on a surface of the positive electrode current collector, and the positive electrode current collector not coated with the positive electrode active material layer protrudes from the positive electrode current collector coated with the positive electrode active material layer. The positive electrode current collector not coated with the positive electrode active material layer serves as the positive electrode tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide, and so on. The negative electrode sheet comprises a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer. The negative electrode current collector not coated with the negative electrode active material layer serves as the negative electrode tab. The material of the negative electrode current collector can be copper, and the negative active material can be carbon or silicon, and so on. To ensure that there is no fuse blow during high current flow, the number of positive electrode tabs is plurality and stacked together, and the number of negative electrode tabs is plurality and stacked together. The material of the separator can be PP (polypropylene) or PE (polyethylene), and so on. Furthermore, the electrode assembly can be a wound structure or a stacked structure. The embodiments of the present disclosure are not limited herein.

The battery also comprises a busbar component. The multiple battery cells can be electrically connected through the busbar component to achieve series, parallel, or hybrid connections of the multiple battery cells.

The battery also includes a high-voltage wiring harness. One end of the high-voltage wiring harness is connected to the output end of the battery cell group, and the other end is connected to the external output interface of the battery to externally output electrical energy.

The battery also includes a battery heating system, wherein the battery heating system includes a heater and a heating wiring harness. The heater is configured to heat the battery cell, thus preventing the lithium plating due to low-temperature operation. The heater can be of the contact type or wrap-around type. One end of the heating wiring harness is connected to the heater, and the other end is connected to the heating power supply interface of the battery to introduce external electrical energy. The heater utilizes external electrical energy for heating to warm the battery cells.

In the related technology, the high-voltage wiring harness and the heating wiring harness are included inside the battery. Typically, the high-voltage wiring harness is usually attached to the inner wall of the box in the manner of pasting, and the heating wiring harness is fixed to the components inside the battery by using zip ties. On one hand, due to the long high-voltage wiring harness, if the high-voltage wiring harness is tilted during the process of attaching the high-voltage wiring harness to the inner wall of the box, the excessive amount of space will be occupied, which will make it difficult to close the box. On the other hand, the use of zip ties to fix the heating wiring harness will result in an inconsistent location of the heating wiring harness for each battery, which will lead to safety hazards.

Inventors have found that, during the actual assembly process, the battery cell is first arranged inside the box. Subsequently, one end of the high-voltage wiring harness is arranged between the inner wall of the box and the battery cell. The backing adhesive of the high-voltage wiring harness is then removed, and while pressing the high-voltage wiring harness. The high-voltage wiring harness is attached to the inner wall of the box while pressing down on the high-voltage wiring harness until the other end of the high-voltage wiring harness is attached to the inside wall of the box. If the high-voltage wiring harness is found to be tilted, its position cannot be easily adjusted because the high-voltage wiring harness has been completely adhered to the inner wall. Furthermore, the high-voltage wiring harness is provided in the gap between the inner wall of the box and the battery cell, where the gap still leaves enough space for arranging the heating wiring harness side by side.

Based on the above ideas, the inventor of the present disclosure proposes a technical solution that uses a component to fix both the high-voltage wiring harness and the heating wiring harness to the inner wall of the box. Not only can the positional accuracy of the high-voltage wiring harness and the heating wiring harness be ensured, but also the safety performance of the battery can be improved.

It will be understood that the battery cell described in the embodiments of the present disclosure can directly power an electric device, or can be connected in parallel or in series to form a battery to power various electric devices in the form of a battery.

It is understandable that the embodiments of the present disclosure, the electric devices to which the battery cells or batteries are applicable, as described in embodiments of the present application, can take various forms. For example, they could be used in devices such as mobile phones, portable devices, laptops, electric bicycles, electric cars, ships, spacecraft, electric toys, and power tools, among others. Aerospace vehicles include airplanes, rockets, spaceplanes, and spacecraft, among others. Electric toys include stationary or mobile electric toys, for example, video game consoles, electric car toys, electric boat toys, and electric airplane toys. Electric tools include metal cutting electric tools, grinding electric tools, assembly electric tools, and railway electric tools, for example, electric drills, electric sanders, electric wrenches, electric screwdrivers, electric hammers, impact drills, concrete vibrators, and electric planers, among others.

The battery cells and batteries described in the embodiments of the present disclosure are not limited to applying to the above-described electric devices, but can be applied to all electric devices using the battery cells and batteries. However, for the sake of simplicity of description, the following embodiments are described using an electric vehicle as an example.

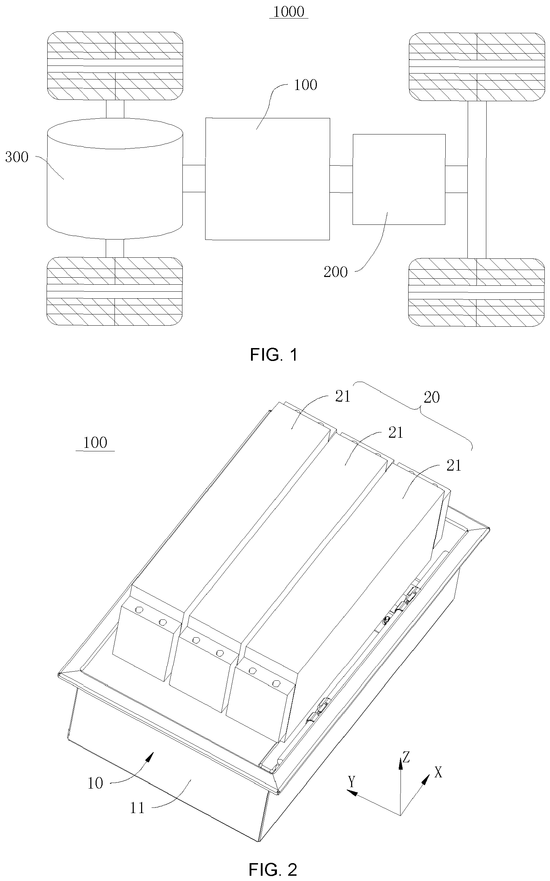

FIG. 1 shows a simple schematic diagram of a vehicle in an embodiment of the present disclosure, and FIG. 2 shows a schematic view of the structure of the battery of the vehicle of FIG. 1.

As shown in FIG. 1, the vehicle 1000 is provided therein with a battery 100, a controller 200, and a motor 300, for example, the battery 100 can be provided at the bottom, the front, or the rear of the vehicle 1000. The vehicle 1000 can be a gasoline-powered car, a natural gas car, or a new energy vehicle. The new energy vehicles can be pure electric cars, hybrid cars, extended-range cars, etc.

In some embodiments of the present disclosure, the battery 100 is configured to provide power for the vehicle 1000. For instance, the battery 100 can serve as the operational power source for the vehicle 1000. The controller 200 is configured to manage the supply of power from the battery 100 to the motor 300, e.g., for working power requirements for starting, navigating, and driving the vehicle 1000.

In some other embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

The battery 100 mentioned in the embodiments of the present disclosure refers to a single physical module that comprises one or multiple battery cells 21 to provide higher voltage and capacity. For example, the battery 100 comprises multiple battery cells 21 connected in series or in parallel.

As shown in FIG. 2, the battery 100 includes a battery cell group 20, a busbar component (not shown), and a box 10, wherein the battery cell group 20 includes multiple battery cells 21. The multiple battery cells 21 are combined in parallel, series, or hybrid with each other by the busbar component to realize the high voltage output. The multiple battery cells 21 and the busbar component are assembled and placed inside the box 10.

The box 10 includes a first box 11 and a second box (not shown in the figure), the first box 11 and the second box 10 form a battery cavity when they cover each other, and multiple battery 100 modules are placed in the battery cavity. The shape of the first box 11 and the second box can be based on the shape of the multiple battery module combinations. The first box 11 and the second box can both be provided with an opening. The first box 11 and the second box can be hollow rectangular and each has only one face as an opening face, the openings of the first box 11 and the second box are provided opposite to each other, and the first box 11 and the second box are snapped together to form a box 10 with a closed cavity. The multiple battery cells 21 are arranged in parallel, series, or hybrid with each other inside the box 10 formed by the first box 11 and the second box when they are snapped together.

In some embodiments of the present disclosure, the box 10 is in the shape of a hexahedron. The box 10 extends in a length direction along a first direction X, in a width direction along a second direction Y, and in a height direction along a third direction Z. The first box 11 is provided therein with a space for the multiple battery cells 21, and the second box 10 is snapped to the first box 11 to enclose the multiple battery cells 21 within the box 10. The battery cell 21 is in the shape of a hexahedron. The multiple battery cells 21 are arranged side by side along the second direction Y. Each battery cell 21 extends in the length direction along the first direction X, in the width direction along the second direction Y, and in the height direction along the third direction Z.

In other embodiments, the box 10 can also be in the shape of a cylinder or other shapes, and the multiple battery cells 21 can also be arranged side by side along the first direction X.

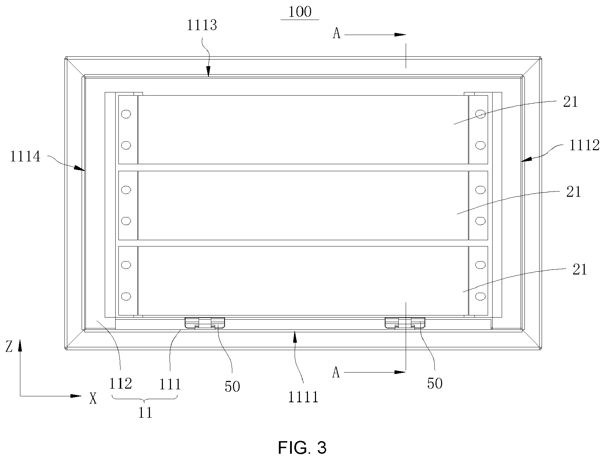

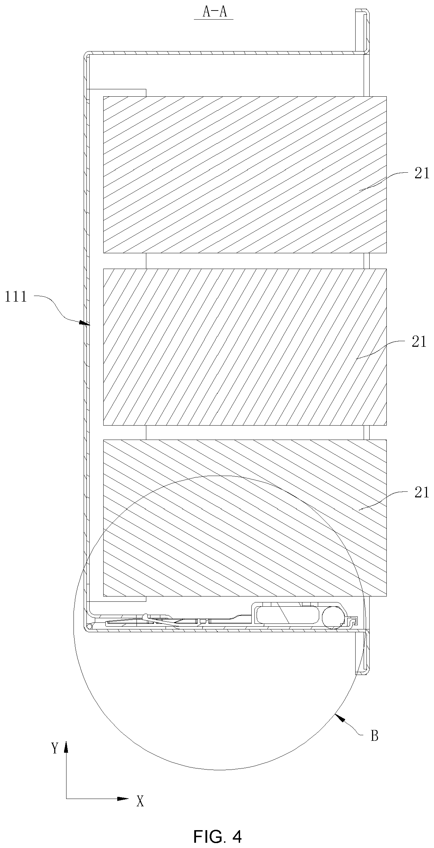

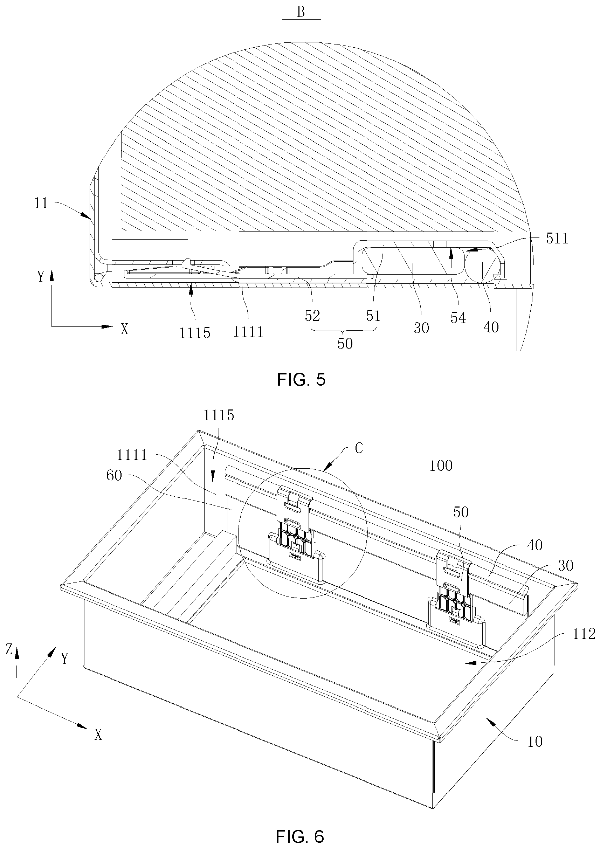

FIG. 3 shows a top view of the battery provided in some embodiments of the present disclosure; FIG. 4 shows an A-A sectional view of FIG. 3; and FIG. 5 shows a partially enlarged view at B of FIG. 4.

As shown in FIGS. 2, 3, 4, and 5, some embodiments of the present disclosure provide a battery 100, wherein the battery 100 comprises a box 10, a high-voltage wiring harness 30, a heating wiring harness 40, and a wiring harness fixing device 50. The high-voltage wiring harness 30 and the heating wiring harness 40 are both provided in the box 10. The wiring harness fixing device 50 is configured to fix the high-voltage wiring harness 30 and the heating wiring harness 40 to the inner wall of the box 10.

The inner wall of the box 10 refers to the inner wall of the first box 11. As shown in FIG. 3, the first box 11 is provided with a side wall 111 and a bottom wall 112, wherein the side wall 111 is arranged around the bottom wall 112. One end of the side wall 111 is connected to the bottom wall 112 and the other end is enclosed to form an opening. The inner wall of the first box 11 refers to a surface of the side wall 111 facing the interior of the first box 11 and a surface of the bottom wall 112 facing the interior of the first box 11. For example, as shown in FIG. 3, based on the aforementioned embodiment of "the box 10 is in the shape of a hexahedron", the side wall 111 includes a first side wall 1111, a second side wall 1112, a third side wall 1113, and a fourth side wall 1114. The first side wall 1111 and the third side wall 1113 both extend along the first direction X and are provided opposite to each other in the second direction Y. The second side wall 1112 and the fourth side wall 1114 both extend along the second direction Y and are provided opposite to each other in the first direction X. As shown in FIGS. 3, 4, and 5, the surface of the first side wall 1111 facing the interior of the first box 11 is a first inner surface 1115, the surface of the second side wall 1112 facing the interior of the first box 11 is a second inner surface, the surface of the third side wall 1113 facing the interior of the first box 11 is a third inner surface, the surface of the fourth side wall 1114 facing the interior of the first box 11 is a fourth inner surface, and the surface of the bottom wall 112 facing the interior of the first box 11 is a fifth inner surface (not shown in the figures).

The battery cell group 20 is arranged inside the first box 11, and one of the bottom wall 112 and the side wall 111 can be configured to support the battery cell group 20, and the other is configured to mount the high-voltage wiring harness 30 and the heating wiring harness 40. In some embodiments of the present disclosure, the bottom wall 112 is configured to support the battery cell group 20, and the high-voltage wiring harness 30 and the heating wiring harness 40 are fixed to the first side wall 1111. The high-voltage wiring harness 30 and the heating wiring harness 40 both extend in the length direction along the first direction X, and the high-voltage wiring harness 30 and the heating wiring harness 40 are spaced apart along the third direction Z. The heating power supply interface and the external output interface are both provided on the second side wall 1112. In other embodiments, it is also possible that the side wall 111 is configured to support the battery cell group 20, the high-voltage wiring harness 30 and the heating wiring harness 40 are fixed to the bottom wall 112, and the heating power supply interface and the external output interface can also be provided at other locations of the box 10.

The wiring harness fixing device 50 can be a metal piece or a plastic piece. The wiring harness fixing device 50 is fixed to the inner wall of the box 10. The wiring harness fixing device 50 can be fixed to the inner wall of the box 10 before the high-voltage wiring harness 30 and the heating wiring harness 40 are placed into the box 10, and the wiring harness fixing device 50 can also be fixed to the inner wall of the box 10 after the high-voltage wiring harness 30 and the heating wiring harness 40 are placed into the box 10. The wiring harness fixing device 50 can be fixedly connected to the inner wall of the box 10 or can be detachably connected to the inner wall of the box 10. The high-voltage wiring harness 30 and the heating wiring harness 40 can either be pressed against the inner wall of the box 10 when fixed to the inner wall of the box 10, or they can be pressed against the inner wall of the box 10 through a portion of the structure of the wiring harness fixing device 50 or other intermediate connecting pieces.

One wiring harness fixing device 50 can be provided. One wiring harness fixing device 50 is used to simultaneously fix both the high-voltage wiring harness 30 and the heating wiring harness 40 to the inner wall of the box 10. Multiple wiring harness fixing devices 50 can also be provided. The multiple wiring harness fixing devices 50 are arranged at intervals along the first direction X. The multiple wiring harness fixing devices 50 jointly fix the high-voltage wiring harness 30 and the heating wiring harness 40.

For the battery 100 provided in the embodiments of the present disclosure, the wiring harness fixing device 50 simultaneously fixes the high-voltage wiring harness 30 and the heating wiring harness 40 to the inner wall of the box 10. This not only simplifies the assembly process of the battery 100 but also accurately fixes the positions of the high-voltage wiring harness 30 and the heating wiring harness 40, thus enhancing the safety performance of the battery 100.

As shown in FIG.5, in some embodiments of the present disclosure, the wiring harness fixing device 50 comprises a harness fixing portion 51, wherein the harness fixing portion 51, together with the inner wall of the box 10, forms a channel 54 for the high-voltage wiring harness 30 and the heating wiring harness 40 to pass through.

As shown in FIG. 5, the harness fixing portion 51 is a structure configured for restraining the high-voltage wiring harness 30 and the heating wiring harness 40 on the wiring harness fixing device 50. A surface of the harness fixing portion 51 facing the first side wall 1111 is recessed to form a concave portion 511 configured for accommodating the high-voltage wiring harness 30 and the heating wiring harness 40. The concave portion 511 extends to both outer surfaces of the wiring harness fixing device 50 along the first direction X. The opening of the concave portion 511 faces toward the first inner surface 1115 of the first side wall 1111, and the concave portion 511 and the first inner surface 1115 together form a channel 54. The channel 54 extends in the first direction X and the channel 54 is configured for the high-voltage wiring harness 30 and the heating wiring harness 40 to pass through. The cross-sectional shape of the channel 54 can be circular, oval, square, or other shapes.

In the above solution, the harness fixing portion 51, together with the inner wall of the box 10, forms a channel 54 for the high-voltage wiring harness 30 and the heating wiring harness 40 to pass through. This allows for a reduction in the thickness of the harness fixing portion 51 and the space occupied by the harness fixing portion 51. Therefore, the internal structure of the battery 100 becomes more compact, which leads to an increased energy density.

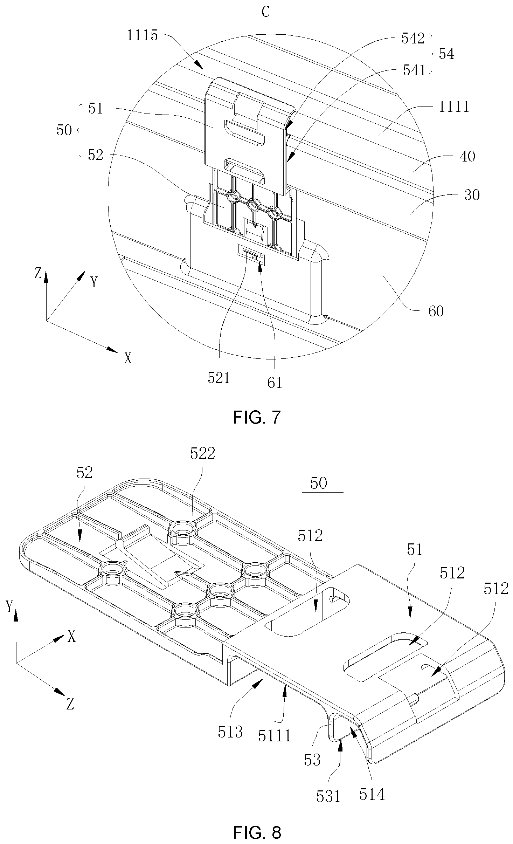

FIG. 6 shows a schematic diagram of the assembly of a first form of the box and wiring harness fixing device of the battery in some embodiments of the present disclosure; FIG. 7 shows a partially enlarged view at C in FIG. 6; and FIG. 8 shows a schematic structural diagram of the wiring harness fixing device of the battery illustrated in FIG. 7.

As shown in FIG. 6, FIG. 7 and FIG. 8, according to some embodiments of the present disclosure, on one side of the harness fixing portion 51 facing the inner wall of the box 10, a partition 53 is arranged. The partition 53 is configured to separate the channel 54 into a first sub-channel 541 and a second sub-channel 542. The first sub-channel 541 is configured for the high-voltage wiring harness 30 to pass through, and the second sub-channel 542 is configured for the heating wiring harness 40 to pass through.

Specifically, the side of the concave portion 511 facing the first side wall 1111 is provided with a bottom surface 5111, and the partition 53 protrudes from the bottom surface 5111 of the concave portion 511 to separate the concave portion 511 (refer to FIG. 5) to form a first concave portion 513 and a second concave portion 514. The first concave portion 513 and the first inner surface 1115 of the first side wall 1111 together form a first sub-channel 541. The second concave portion 514 and the first inner surface 1115 of the first side wall 1111 together form a second sub-channel 542.

One end of the partition 53 is connected to the bottom surface 5111 of the concave portion 511 and the other end is an end part 531, which can be against the first side wall 1111 or can be provided with a gap with the first side wall 1111. In some embodiments of the present disclosure, the end part 531 of the partition 53 can be provided with a first portion and a second portion. The first portion extends toward one side of the first concave portion 513 and the second portion extends in the direction of the second concave portion 514 so as to prevent the high-voltage wiring harness 30 from detaching from the first concave portion 513 and the heating wiring harness 40 from detaching from the second concave portion 514.

The partition 53 can be integrally molded with the harness fixing portion 51 or can be provided separately from and connected to the harness fixing portion 51.

As shown in FIG. 8, the harness fixing portion 51 can be provided with a weight-reducing groove 512 so as to reduce the weight of the wiring harness fixing device 50, thus reducing the manufacturing cost of the wiring harness fixing device 50. Multiple weight-reducing grooves 512 can be provided to further reduce the weight of the wiring harness fixing device 50. For example, three weight-reducing grooves 512 can be provided, wherein two of the weight-reducing grooves 512 are provided in the first concave portion 513 and the other weight-reducing groove 512 is provided in the second concave portion 514.

In the above solution, the partition 53 separates the channel 54 into a first sub-channel 541 and a second sub-channel 542. This not only physically isolates the high-voltage wiring harness 30 and the heating wiring harness 40 but also allows for the separate fixation of the high-voltage wiring harness 30 and the heating wiring harness 40, thus improving the firmness and the positional accuracy of the high-voltage wiring harness 30 and heating wiring harness 40.

As shown in FIGS. 6, 7, and 8, according to some embodiments of the present disclosure, the wiring harness fixing device 50 also includes a connecting part 52. The connecting part 52 is arranged on one side of the harness fixing portion 51 and is connected to the harness fixing portion 51. The connecting part 52 is fixed to the box 10.

Along the third direction Z, the connecting part 52 is disposed on a side of the wiring harness fixing device 50 near the bottom wall 112. The harness fixing portion 51 is disposed on a side of the wiring harness fixing device 50 that is back from the bottom wall 112. The connecting part 52 can be directly connected to the box 10; and the connecting part 52 and the box 10 can also be indirectly connected by other connecting pieces. The connecting part 52 and the box 10 can be connected through methods such as welding, threaded connections, riveting, etc., which are not easily disassembled. The connecting part 52 and the box 10 can also be connected in an easily dismantlable manner using methods like latches, wedge fittings, and the like. The connecting part 52 and the harness fixing portion 51 can be integrally molded or movably connected.

In the above solution, the connecting part 52 is fixed to the box 10 so as to fix the wiring harness fixing device 50 to the box 10, thus ensuring the stability of the channel 54 formed by the harness fixing portion 51 and the inner wall of the box 10 and firmly fixing the high-voltage wiring harness 30 and heating wiring harness 40 inside the box 10.

As shown in FIGS. 6, 7, and 8, in some embodiments of the present disclosure, the connecting part 52 is provided with a first engagement part 521, and the battery 100 further comprises a bracket 60. The bracket 60 is fixed to an inner wall of the box 10, and the bracket 60 is provided with a second engagement part 61 configured for cooperating with the first engagement part 521.

The bracket 60 can be a sheet metal member, the bracket 60 is provided in abutment with the first inner surface 1115 of the first side wall 1111, and the bracket 60 is riveted or welded to the first side wall 1111. One of the first engagement part 521 and the second engagement part 61 can be a slot and the other is a latch. The latch is snapped on the slot so as to achieve the snapping cooperation between the wiring harness fixing device 50 and the bracket 60. In some embodiments of the present disclosure, the second engagement part 61 is a slot passing through the bracket 60 in the thickness direction of the bracket 60, and the first engagement part 521 is a latch. The bracket 60 can also be provided with a guiding structure, wherein the guiding structure is configured to guide the connecting part 52 to slide along the third direction Z so as to facilitate the snapping of the first engagement part 521 into the second engagement part 61. The guiding structure can be formed on one side of the bracket 60 facing the first side wall 1111, or it can be formed on the side of the bracket 60 away from the first side wall 1111.

In the above solution, the bracket 60 is provided with a second engagement part, which simplifies the structure inside the box 10 and reduces the molding cost of the second engagement part 61. The connecting part 52 and the bracket 60 are connected in a snapping manner by the first engagement part 521 and the second engagement part 61 so as to enable the detachable connection between the wiring harness fixing device 50 and the inner wall of the box 10, facilitate the assembly and disassembly of the wiring harness fixing device 50, and facilitate the assembly, maintenance, and disassembly of the battery 100.

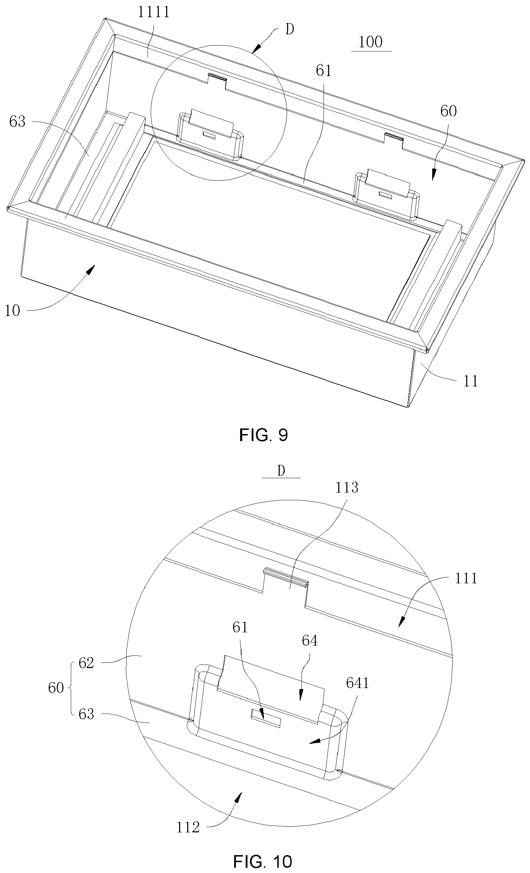

FIG. 9 shows a schematic diagram of the assembly of a second form of the box and wiring harness fixing device of the battery in some embodiments of the present disclosure, and FIG. 10 shows a partially enlarged view at D in FIG. 9.

As shown in FIGS. 8, 9, and 10, in some embodiments of the present disclosure, a side of the bracket 60 facing the inner wall of the box 10 and the inner wall of the box 10 jointly define a slot 64 configured for the connecting part 52 to insert, and the second engagement part 61 is arranged on a slot wall 641 of the slot 64.

The side of the bracket 60 facing the first side wall 1111 is recessed toward the side back from the first side wall 1111 to define the slot 64 in conjunction with the first side wall 1111. Along the third direction Z, the end of the slot 64 back from the bottom wall 112 is provided with an opening for connecting part 52 to insert. Along the first direction X, the two oppositely arranged inner walls of the slot 64 are configured to guide the connecting part 52 to insert into the slot 64 along the third direction Z. Along the second direction Y, the inner wall of the recess in the bracket 60 is provided with the second engagement part 61, wherein the second engagement part 61 is an opening.

As shown in FIGS. 9 and 10, the bracket 60 can include a first connecting part 62 and a second connecting part 63 which are interconnected. The first connecting part 62 is connected to the side wall 111, and the second connecting part 63 is connected to the bottom wall 112. The bracket 60 extends along the connecting seam between the side wall 111 and the bottom wall 112, serving to reinforce the structural strength of the first box 11. The second engagement part 61 is arranged on the first connecting part 62.

In the above solution, the bracket 60 and the inner wall of the box 10 jointly define a slot 64 so that the connecting part 52 is guided to cooperate with the surface of the bracket 60 in a manner of sliding so as to achieve a snapping cooperation therebetween. This simplifies the assembly process of the wiring harness fixing device 50 and the bracket 60.

In other embodiments, the slot 64 can also be a wedge-shaped slot whose width (i.e., the slot width of the slot 64 along the first direction X) tapers along a direction proximate to the bottom wall 112. The connecting part 52 is a wedge-shaped structure that matches the shape of the slot 64. The connecting part 52 is inserted into the slot 64 and wedges with the slot 64, and is fixed to the bracket 60 in combination with the frictional force of the harness fixing portion 51, the high-voltage wiring harness 30, the heating wiring harness 40, and the surface of the bracket 60.

As shown in FIG.8, in some embodiments of the present disclosure, the connecting part 52 is provided with a reinforcement rib 522.

Specifically, the reinforcement rib 522 is provided on the back surface of the connecting part 52, i.e., the side that is back from the first side wall 1111. The reinforcement rib 522 can be arranged generally and uniformly on the back surface of the connecting rib to uniformly increase the strength of the connecting part 52.

In the above solution, the arrangement of the reinforcement rib 522 on the connecting part 52 enhances the structural strength of the connecting part 52, thus ensuring a robust connection between the connecting part 52 and the inner wall of the box 10.

According to some embodiments of the present disclosure, the connecting part 52 and the harness fixing portion 51 are integrally molded.

As shown in FIG. 8, the connecting part 52 and the harness fixing portion 51 are fixedly connected, and the wiring harness fixing device 50 is integrally molded.

The harness fixing portion 51 can also be provided with a pressing portion. The press portion is configured for applying a force to deform the harness fixing portion 51 with respect to the connecting part 52 in order to place the high-voltage wiring harness 30 and the heating wiring harness 40 into the channel 54 or out of the channel 54. The pressing portion can be a protrusion of the harness fixing portion 51 projecting on one or both sides along the first direction X.

In the above solution, the wiring harness fixing device 50 is an integrally molded structure, which is simple to construct and easy to process and mold. The high-voltage wiring harness 30 and heating wiring harness 40 are fixed to the inner wall of the box 10 through the elasticity of the material of the harness fixing portion 51 itself, which is simple, reliable, and easy to implement.

According to some embodiments, the connecting part 52 and the harness fixing portion 51 can also be provided separately and then fixedly connected.

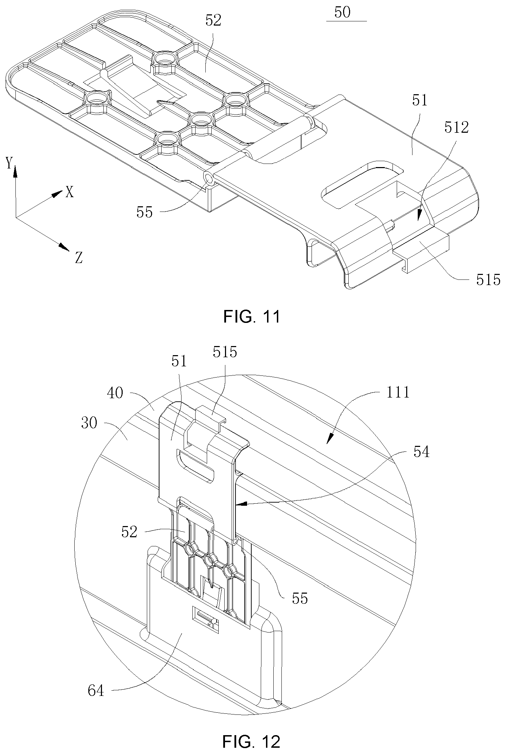

FIG. 11 shows a schematic structural diagram of the second form of the wiring harness fixing device of the battery in some embodiments of the present disclosure, and FIG. 12 shows a schematic diagram of the structure of the wiring harness fixing device of FIG. 11 in cooperation with the box.

As shown in FIGS. 10, 11, and 12, according to some embodiments of the present disclosure, the harness fixing portion 51 is rotatably connected to the connecting part 52, and the axis of rotation of the harness fixing portion 51 is parallel to an extension direction of the channel 54.

As shown in FIG. 11, the wiring harness fixing device 50 further includes a turning pin 55, wherein an axial direction of the turning pin 55 extends along the first direction X. The connection between the harness fixing portion 51 and the connecting part 52 is provided with a shaft hole. The turning pin 55, along the first direction X, passes through the axle holes of the harness fixing portion 51 and the connecting part 52, respectively, thus limiting the rotation of the harness fixing portion 51 around the turning pin 55 relative to the connecting part 52. Therefore, the harness fixing portion 51 is enabled to have a closed position and an open position. When the harness fixing portion 51 is in the closed position, the harness fixing portion 51 and the side wall 111 together enclose to form the channel 54 and fix the high-voltage wiring harness 30 and the heating wiring harness 40 to the side wall 111. When the harness fixing portion 51 is in the open position, the harness fixing portion 51 is separated from the side wall 111 so as to place the high-voltage wiring harness 30 and the heating wiring harness 40 into the channel 54 or out of the channel 54.

When the harness fixing portion 51 is in the closed position, the harness fixing portion 51 can be provided with a structure on the harness fixing portion 51 that cooperates with the side wall 111 to realize restraining the harness fixing portion 51 in the closed position.

In the above solution, the harness fixing portion 51 and the connecting part 52 are in the rotational cooperation, which can realize that the connecting part 52 is first connected to the inner wall of the box 10, and the high-voltage wiring harness 30 and the heating wiring harness 40 are placed between the inner wall of the box 10 and the harness fixing portion 51. The harness fixing portion 51 is then driven to rotate in a direction close to the inner wall of the box 10 so as to fix the high-voltage wiring harness 30 and the heating wiring harness 40 to the inner wall of the box 10. Therefore, the assembly process of the battery 100 is simplified and the assembly efficiency of the battery 100 is improved.

As shown in FIGS. 10 and 11, according to some embodiments of the present disclosure, the inner wall of the box 10 is provided with a third engagement part 113, wherein the harness fixing portion 51 is provided with a fourth engagement part 515 configured for cooperating with the third engagement part 113.

The first inner surface 1115 of the first side wall 1111 is provided with a third engagement part 113, and a fourth engagement part 515 is provided at an end of the harness fixing portion 51 away from the connecting part 52. The third engagement part 113 and the fourth engagement part 515 can be a pair of mating latches, or one can be an opening and the other a resilient latch that snaps to the opening.

The fourth engagement part 515 can be provided in a number of one and arranged in a centered position along the first direction X at the harness fixing portion 51. The fourth engagement part 515 can also be provided in a number of two, and the two fourth engagement parts 515 are provided at intervals along the first direction X on the harness fixing portion 51.

The molding method for the fourth engagement part 515 can take various forms. For example, in the embodiment where the "wiring harness fixing device 50 is a sheet metal member", the fourth engagement part 515 can be directly formed using a stamping process, wherein the fourth engagement part 515 is formed along with the formation of the weight reducing groove 512. Alternatively, the fourth engagement part 515 can be provided separately from the wiring harness fixing device 50 and then welded or adhered to the harness fixing portion 51.

In the above-described embodiment, the harness fixing portion 51 is snapped to the inner wall of the box 10 by the third engagement part 113 and the fourth engagement part 515 so as to fix the position of the harness fixing portion 51 relative to the inner wall of the box 10 after the harness fixing portion 51 fixes the high-voltage wiring harness 30 and the heating wiring harness 40 to the inner wall of the box 10. Thus, the high-voltage wiring harness 30 and the heating wiring harness 40 are firmly fixed inside the box 10.

In other embodiments, the third engagement part 113 can also be arranged on the bracket 60 to further simplify the structure of the box 10.

Some embodiments of the present disclosure provide an electric device, comprising the battery 100. The battery 100 is configured to provide electrical energy.

Due to the characteristics of the battery 100 provided in the embodiment of the present disclosure, the electric device provided in the embodiment of the present disclosure also has the advantages of being easy to assemble and having a high level of safety.

As shown in FIGS. 1 to 12, some embodiments of the present disclosure provide a battery 100 comprising a box 10, multiple battery cells 21, a high-voltage wiring harness 30, a heating wiring harness 40, a bracket 60, and multiple wiring harness fixing devices 50. The multiple battery cells 21 are arranged inside the box 10. The box 10 includes a first box 11, and the first box 11 includes a side wall 111 and a bottom wall 112. The bracket 60 is a sheet metal member, and the bracket 60 includes a first connecting part 62 and a second connecting part 63; the first connecting part 62 is arranged on the inner side of the side wall 111 and is rivetedly connected to the side wall 111; the second connecting part 63 is arranged on the inner side of the bottom wall 112 and is rivetedly connected to the bottom wall 112; and the bracket 60 extends to form a frame shape along the connection between the bottom wall 112 and the side wall 111, configuring for reinforcing the structural strength of the first box 11. The bracket 60 is provided with multiple slots 64, wherein the multiple slots 64 are provided at intervals along the first direction X. Each slot 64 corresponds to a wiring harness fixing device 50. The slot wall 641 of the slot 64 is provided with a second engagement part 61. The wiring harness fixing device 50 comprises a harness fixing portion 51 and a connecting part 52. The connecting part 52 is provided with a first engagement part 521. The connecting part 52 is inserted into the slot 64 and is snap-fitted to the second engagement part 61 by the first engagement part 521. The harness fixing portion 51 is provided with a first concave portion 513 and a second concave portion 514. The first concave portion 513 forms a first sub-channel 541 in conjunction with the side wall 111. The second concave portion 514 forms a second sub-channel 542 in conjunction with the side wall 111. Both the first sub-channel 541 and the second sub-channel 542 extend in a first direction X. The high-voltage wiring harness 30 passes through the first sub-channel 541, and the heating wiring harness 40 passes through the second sub-channel 542. The harness fixing portion 51 and the connecting part 52 can be of an integrally molded structure. The harness fixing portion 51 and the connecting part 52 can also be rotationally connected along the first direction X. The bracket 60 is provided with a third engagement part 113 and the harness fixing portion 51 is provided with a fourth engagement part 515. The harness fixing portion 51 is snapped to the fourth engagement part 515 via the third engagement part 113 so as to fix the high-voltage wiring harness 30 and the heating wiring harness 40 to the bracket 60 connected to the side wall 111.

Based on the wiring harness fixing device 50 in which the harness fixing portion 51 and the connecting part 52 are integrally molded, the assembly process of the battery 100 is as follows:
placing multiple battery cells 21 inside the first box 11, and placing the high-voltage wiring harness 30 and the heating wiring harness 40 between multiple battery cells 21 and the side wall 111, wherein both the high-voltage wiring harness 30 and the heating wiring harness 40 extend along the first direction X;
inserting the connecting part 52 of the wiring harness fixing device 50 into the slot 64 to embed the high-voltage wiring harness 30 into the first concave portion 513 and to embed the heating wiring harness 40 into the second concave portion 514, and snapping the first engagement part 521 with the second engagement part 61 to fix the high-voltage wiring harness 30 and the heating wiring harness 40 onto the bracket 60 fixed to the side wall 111; and
when it is necessary to disassemble the high-voltage wiring harness 30 and the heating wiring harness 40, applying an external force to open the harness fixing portion 51 in a direction away from the bracket 60 to enable the removal of the high-voltage wiring harness 30 and the heating wiring harness 40.

Based on the wiring harness fixing device 50 in which the harness fixing portion 51 and the connecting part 52 can also be in rotation connection along the first direction X, in the assembly process of the battery 100, the connecting part 52 of the wiring harness fixing device 50 can be allowed to be inserted into the slot 64 first. Subsequently, the high voltage harness 30 and the heating harness 40 are put in. The harness fixing portion 51 is snapped to the fourth engagement part 515 via the third engagement part 113 so as to fix the high-voltage wiring harness 30 and the heating wiring harness 40 to the bracket 60 connected to the side wall 111.

In the battery 100 of the embodiments of the present disclosure, the high-voltage wiring harness 30 and the heating wiring harness 40 are fixed to the inner wall of the side wall 111 by the wiring harness fixing device 50, which is capable of fixing the position of the high-voltage wiring harness 30 and the heating wiring harness 40 inside the box 10. On one hand, this simplifies the assembly process of the battery 100. On the other hand, the harness fixing portion 51 wraps around the high-voltage wiring harness 30 and the heating wiring harness 40 from one side of the battery cell 21, thus effectively preventing scratches or damage to the high-voltage wiring harness 30 and the heating wiring harness 40 during the assembly process.

While preferred embodiments have been described and illustrated in the present disclosure, it is possible to make various improvements and replace components with equivalents within the scope of the present disclosure. In particular, as long as there are no structural conflicts, the various technical features mentioned in each embodiment can be combined in any way. The present disclosure is not limited to the specific embodiments disclosed herein but includes all technical solutions falling within the scope of the claims.

## Claims

1. A battery, comprising
a box;
a high-voltage wiring harness, arranged inside the box;
a heating wiring harness, arranged inside the box; and
a wiring harness fixing device, configured to fix the high-voltage wiring harness and the heating wiring harness to an inner wall of the box.

2. The battery according to claim 1, wherein the wiring harness fixing device comprises a harness fixing portion, wherein the harness fixing portion, together with the inner wall of the box, forms a channel for the high-voltage wiring harness and the heating wiring harness to pass through.

3. The battery according to claim 2, wherein a partition is arranged on one side of the harness fixing portion facing the inner wall of the box; the partition is configured to separate the channel into a first sub-channel and a second sub-channel; and the first sub-channel is configured for the high-voltage wiring harness to pass through, and the second sub-channel is configured for the heating wiring harness to pass through.

4. The battery according to claim 2 or 3, wherein the wiring harness fixing device further comprises a connecting part; the connecting part is arranged on one side of the harness fixing portion and is connected to the harness fixing portion; and the connecting part is fixed to the box.

5. The battery according to claim 4, wherein the connecting part is provided with a first engagement part, and the battery further comprises
a bracket, wherein the bracket is fixed to the inner wall of the box; and the bracket is provided with a second engagement part configured to coordinate with the first engagement part.

6. The battery according to claim 5, wherein a side of the bracket facing the inner wall of the box and the inner wall of the box jointly define a slot configured for the connecting part to insert, and the second engagement part is arranged on a slot wall of the slot.

7. The battery according to any one of claims 4 to 6, wherein the connecting part is provided with a reinforcement rib.

8. The battery according to any one of claims 4 to 7, wherein the connecting part and the harness fixing portion are integrally molded.

9. The battery according to any one of claims 4 to 7, wherein the harness fixing portion is rotatably connected to the connecting part, and an axis of rotation of the harness fixing portion is parallel to an extension direction of the channel.

10. The battery according to claim 9, wherein the inner wall of the box is provided with a third engagement part, wherein the harness fixing portion is provided with a fourth engagement part configured for cooperating with the third engagement part.

11. An electric device, comprising the battery according to any one of claims 1 to 10, wherein the battery is configured to provide electrical energy.
